# FASCICULE DE BREVET EUROPEEN

(11) **EP 1 932 729 B1**
(45) Date de publication et mention de la délivrance du brevet: **08.07.2009**
(21) Numéro de dépôt: 07301526.5
(22) Date de dépôt: 06.11.2007
(51) Int. Cl.: B60R 21/34

(54) **Agencement de cloison entre pare-brise et capot d'un véhicule automobile**
Anordnungsmodul zwischen Windschutzscheibe und Haube eines Fahrzeuges
Barrier arrangement between windscreen and bonnet of a vehicle.

(30) Priorité: 15.12.2006 FR 0655532
(43) Date de publication de la demande: 18.06.2008
(73) Titulaire: Renault, 92100 Boulogne Billancourt (FR)
(72) Inventeur: Corbe, Emmanuel, 78790 Montchauvet (FR)

(56) Documents cités:
- EP-A- 0 947 415
- DE-A1- 10 157 464
- US-A- 5 273 341

## Description

### DOMAINE TECHNIQUE

La présente invention concerne un agencement de cloison, destinée à assurer une étanchéité entre le pare-brise et le capot d'un véhicule automobile, ainsi qu'une étanchéité entre le compartiment moteur et l'habitacle du véhicule automobile.

La plupart des véhicules automobiles sont construits sur la base d'un compartiment moteur, fermé par un capot supérieur, et d'un habitacle, présentant un pare-brise dans sa partie frontale. Une cloison transversale située dans le compartiment moteur est prévue entre le capot avant et le pare-brise. Cette cloison est également connue sous le nom de « boîte à eau ». Cette boîte à eau assure plusieurs fonctions mentionnées ci-dessous.

Tout d'abord, la boîte à eau permet de collecter et de faire écouler et de faire ressortir des eaux de pluie ruisselantes, accompagnées de déchets organiques, tels que des feuilles d'arbres et autres, en provenance du pare-brise.

Ensuite, la boîte à eau permet l'admission et le passage d'air frais non pollué à partir de l'extérieur pour alimenter l'habitacle.

La boite à eau garantit une étanchéité en interdisant le passage de l'eau vers le compartiment moteur fermé par le capot, tout en prévoyant que ce capot puisse être ouvert et fermé à volonté pour l'accès au moteur.

De par son emplacement, la boîte à eau participe à l'acoustique de l'habitacle, en formant une cloison anti-bruit, atténuant les ondes sonores générées par le moteur et passant du compartiment moteur vers le milieu extérieur et vers l'habitacle.

Des pièces techniques, telles que les essuie-vitres ou certaines de leurs parties constitutives, traversent la boîte à eau. La boîte à eau doit ainsi permettre l'accès eux organes situés en zone sous baie, tel que par exemple le moteur de l'essuie-vitre.

Enfin, il s'avère nécessaire que la boîte à eau réponde aux contraintes appelées « choc piéton », en assurant que les blessures occasionnées à une personne percutée par le véhicule automobile lors d'un accident soient minimisées. Les pièces sont ainsi configurées de manière à ce qu'elles ne présentent pas de point dur lors du choc.

Lorsqu'une personne est heurtée par un véhicule, son corps est soulevé par la calandre avant, puis vient buter sur la surface supérieure du capot moteur. Le capot forme une plaque métallique rigide, engendrant de ce fait des blessures importantes. Afin de réduire la gravité des accidents, le capot doit pouvoir descendre sensiblement en direction du sol, c'est-à-dire dans une direction opposée au choc, qui va être le plus souvent sensiblement perpendiculaire à la surface supérieure de ce capot.

Des tests sont connus sous la dénomination « crash-test Euro-NCAP » et classent les véhicules en différentes catégories, « bonne », « moyenne » ou « mauvaise » protection des piétons. Des normes internationales actuelles prévoient que le capot doit s'enfoncer d'au minimum d'environ 35 mm en bordure latérale et d'au minimum d'environ 65 mm en zone centrale. Des normes futures en cours de préparation vont prévoir des valeurs d'écrasement du capot moteur allant jusqu'à 100 mm.

### ÉTAT DE LA TECHNIQUE ANTÉRIEURE

Les véhicules de type monospace utilisent une boîte à eau classique en tôle ou une boîte à eau dont l'admission d'air obtenue grâce à des évents ménagés dans le capot. Il est bon de rappeler qu'un monospace (aussi appelé monovolume ou MPV pour « Multi-Purpose Vehicle » ou Véhicule Multi-Usage) est un véhicule automobile ne comportant qu'un seul espace intérieur, en général modulable et disposant d'un hayon, par opposition à certaines automobiles qui comportent un coffre à bagage séparé de l'habitacle.

Cependant dans les deux cas de la boîte à eau du monospace, il est impossible de satisfaire aux exigences d'enfoncement du capot avant, liées au « choc piéton ».

On connaît également d'après les documents FR- 2.788.250, FR- 2.847.205, EP- 1.457.395, US- 4.718.713, US- 6.565.148, EP- 1.346.903, US- 2003/ 0.107.243, US- 5.273.341, EP- 1.518.780 et DE- 103.38.143 différents constructions de boîtes à eau, plus particulièrement destinées à des véhicules automobiles de type berline. Ces boîtes à eau apparaissent être toutes construites sur la base d'une gouttière transversale ininterrompue, présentant la forme d'un U en coupe longitudinale. Une branche arrière de la gouttière transversale est fixée à la structure de la caisse du véhicule. Les extrémités latérales de la gouttière transversale sont fixées au niveau d'une structure intérieure des ailes avant du véhicule.

Cependant, ces boîtes à eau traditionnelles font toute la largeur du véhicule sont incompatibles avec une architecture de véhicule de type monospace. Dans le monospace, le moteur et ses accessoires tendent à se retrouver sous le pare-brise, ce dernier prenant par voie de conséquence une position avancée. Il en découle un manque de place et/ou d'accessibilité entre le pare-brise avant et le capot du compartiment moteur.

Dans le document EP-0 947 415-A qui couvre les caracteristiques du préambule de la revendication 1, il est décrit une boîte d'auvent équipant un véhicule automobile en étant montée entre son pare-brise et son capot avant de fermeture du compartiment moteur. Cette boite d'auvent est conçue pour collecter de l'eau de ruissellement et l'évacuer vers les côtés gauche et droit du véhicule. Elle repose directement sur des pièces du châssis ou caisse du véhicule.

### EXPOSÉ DE L'INVENTION

Le problème principal que se propose de résoudre l'invention consiste à mettre au point un agencement de cloison d'étanchéité entre un capot fermant un compartiment moteur et un pare-brise avant. Un deuxième problème est d'optimiser une évacuation de l'eau obtenue à l'aide d'un agencement de cloison dans une configuration où le pare-brise est très avancé, cette configuration étant rencontrée par exemple dans des véhicules type monospace. Un troisième problème est de maîtriser les déplacements de l'agencement de cloison en cas d'impact, de type choc piéton, intervenant directement sur le capot. Un autre problème encore est la nécessité d'obtenir un agencement de cloison permettant d'être facilement démontable pour l'accessibilité aux zones sous-jacentes.

L'invention concerne donc un agencement de cloison tel que défini par la revendication 1 annexée.

Autrement dit, l'agencement de cloison comprend une boîte à eau gauche et une boîte à eau droite et une pièce centrale sous la forme d'une grille d'auvent structurante.

Les deux pièces latérales peuvent chacune être préférentiellement fixées à une entretoise latérale, l'entretoise étant solidarisée à une coupelle d'amortisseur.

Dans une première variante, l'entretoise peut être solidarisée à la coupelle d'amortisseur, sensiblement à l'horizontale, et sensiblement au même niveau que la surface supérieure de cette coupelle d'amortisseur. Dans ce cas, la pièce latérale peut être fixée par une zone de base sur l'entretoise par l'intermédiaire d'un axe de fixation sensiblement vertical.

Dans une deuxième variante, l'entretoise peut être solidarisée à la coupelle d'amortisseur, sensiblement à la verticale d'au moins un rebord de cette coupelle d'amortisseur. Dans ce cas, la pièce latérale peut être fixée par au moins un de ses bords à l'entretoise par l'intermédiaire d'un axe de fixation sensiblement longitudinal.

Dans une autre forme de réalisation, l'agencement de cloison peut comprendre une traverse centrale, supportant la pièce centrale et fixée sur les deux pièces latérales. De manière particulièrement avantageuse, la pièce centrale peut comprendre un élément en un matériau insonorisant, disposé au niveau d'une face inférieure.

Conformément à un autre aspect de la présente invention, un véhicule, de type monospace, est **caractérisé en ce qu**'il possède un agencement de cloison présentant une ou plusieurs des caractéristiques techniques présentées ci-dessus.

### BRÈVE DESCRIPTION DES DESSINS

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue partielle en perspective écorchée avant d'un véhicule automobile, montrant la cloison d'étanchéité selon l'invention ;
- la Figure 2 représente une vue en perspective avant de la cloison d'étanchéité ;
- la Figure 3 représente une vue en coupe longitudinale du véhicule automobile au niveau de la cloison d'étanchéité, selon une première variante ; et
- la Figure 4 représente une vue en coupe longitudinale du véhicule automobile au niveau de la cloison d'étanchéité selon une deuxième variante.

### EXPOSÉ DÉTAILLÉ DE MODES DE RÉALISATION PRÉFÉRÉS

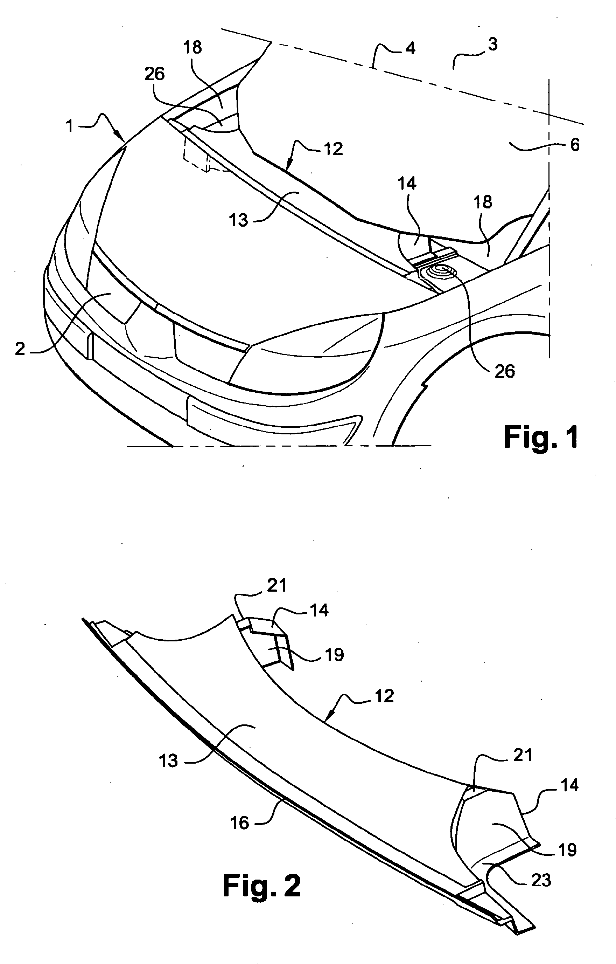

Comme l'illustre la Figure 1, un véhicule automobile (1) (non représenté en globalité) comprend, d'avant en arrière, un compartiment moteur (2), logeant un moteur à combustion interne, situé dans sa partie avant, et un habitacle (3) destiné aux occupants, situé immédiatement derrière le compartiment moteur (2).

Dans sa partie frontale, l'habitacle (3) est fermé par un pare-brise (4). Le pare-brise (4) est incliné vers l'avant, selon le style et le coefficient de pénétration dans l'air souhaité pour le véhicule (1). Le pare-brise (4) présente une surface extérieure (6), orientée vers le haut et assurant l'écoulement de l'eau, et une face intérieure, tournée vers les occupants du véhicule (1).

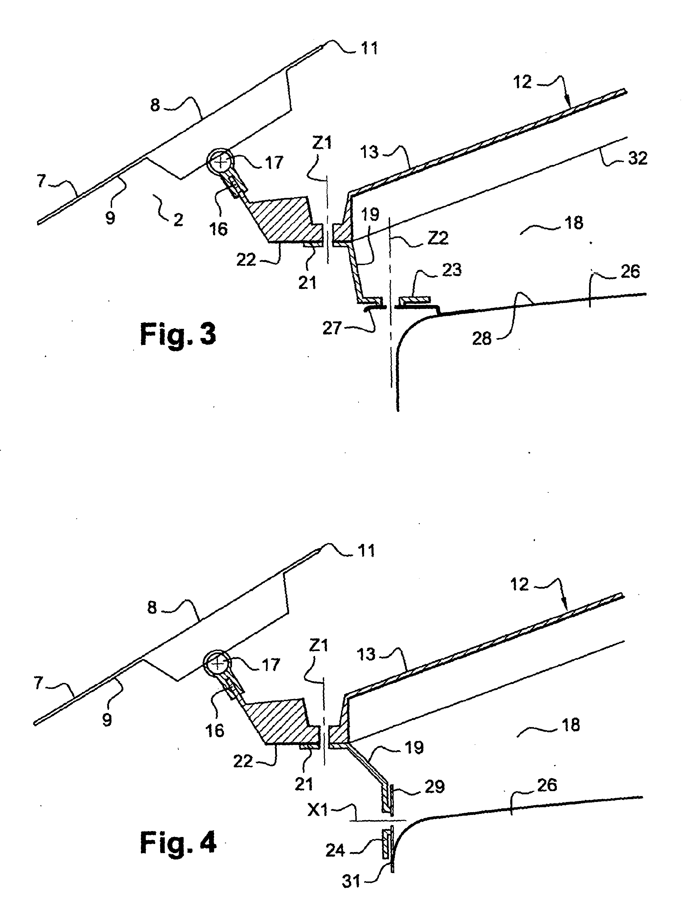

Le compartiment moteur (2) est fermé (voir Figures 3 et 4) par un capot supérieur (7). Le capot (7) est incliné vers l'avant et présente une face supérieure (8), orientée vers le haut et une face inférieure (9), orientée vers le compartiment moteur (2). Le capot (7) s'ouvre et se ferme pour permettre toutes les interventions à l'intérieur du compartiment moteur (2).

Pour assurer une étanchéité entre le bord intérieur avant du pare-brise (4) et un côté arrière (11) du capot (7), un agencement de cloison (12) est monté dans le compartiment moteur (2). Selon l'invention, l'agencement de cloison (12) comprend une pièce centrale (13) et deux pièces latérales droite et gauche (14).

La pièce centrale (13) se présente sous la forme d'une grille d'auvent dite structurante. La grille d'auvent (13) présente deux échancrures à ses deux extrémités latérales droite et gauche.

La grille d'auvent (13) comprend un rebord avant (16), orienté vers le haut, en direction du capot (7), et sur lequel est fixé un joint (17) assurant l'étanchéité entre l'agencement de cloison (12) et le capot (7). Le joint (17) fait saillie vers le haut et vient en butée contre la face inférieure (9) du côté arrière (11) du capot (7).

Les deux pièces latérales (14) sont fixées au niveau de chacune des deux échancrures de la grille d'auvent (13). Les deux pièces latérales (14) forment des boîtes à eau et sont conformées de manière à former deux concavités ou creux latéraux (18). Les boîtes à eau (14) assurent ainsi la fonction de recueillir et de favoriser la sortie de l'eau. L'eau s'écoule d'abord sur la surface extérieure (6) du pare-brise (4), puis sur la surface supérieure de la grille d'auvent (13), et enfin latéralement vers la droite et la gauche jusqu'aux boîtes à eau (14).

Les boîtes à eau (14) comprennent chacune un bord ou un flanc (19) constituant une délimitation longitudinale et transversale des concavités (18). Les boîtes à eau (14) comprennent chacune une zone ou une lame supérieure (21). La lame supérieure (21) permet la fixation des boîtes à eau (14) à la face inférieure (22) de la grille d'auvent (13), grâce à un axe de fixation (Z₁), sensiblement vertical (selon la direction « en Z »).

Dans une première variante de réalisation (voir Figure 3), les boîtes à eau (14) comprennent chacune une zone de base ou lame inférieure (23). Dans une deuxième variante de réalisation (voir Figure 4), les boîtes à eau (14) comprennent chacune une patte ou lame (24) prolongeant le flanc (19).

L'agencement de cloison (12) est monté de façon à être maintenu par les coupelles d'amortisseur (26). Les admissions d'air pour l'intérieur de l'habitacle (3) sont situées au niveau des coupelles d'amortisseurs (26).

Pour assurer la fixation de l'agencement de cloison (12) et dans la première variante de réalisation de la Figure 3, les boîtes à eau (14) sont chacune fixées à une entretoise latérale, sensiblement horizontale (27). Cette entretoise (27) est solidarisée à la coupelle d'amortisseur (26). L'entretoise (27) est sensiblement au même niveau et prolonge vers l'avant la surface supérieure (28) de la coupelle d'amortisseur (26). Un axe de fixation (Z₂), sensiblement vertical (selon la direction « en Z »), assure la fixation de la boîte à eau (14) sur l'entretoise (27).

Pour assurer la fixation de l'agencement de cloison (12) et dans la deuxième variante de réalisation de la Figure 4, les boîtes à eau (14) sont chacune fixées à une entretoise latérale, sensiblement verticale (29). Cette entretoise (29) est solidarisée à la coupelle d'amortisseur (26). L'entretoise (29) est sensiblement à la verticale d'un rebord avant (31) de la coupelle d'amortisseur (26). Un axe de fixation (X₁) sensiblement longitudinal et horizontal (en « X ») assure la fixation de la boîte à eau (14) sur l'entretoise (29).

Une traverse centrale (non représentée), supportant la grille d'auvent (13) est fixée sur les deux boîtes à eau latérales (14), en utilisant par exemple l'axe de fixation (Z₂), sensiblement vertical (selon la direction « en Z »).

Lors d'un impact suite à un choc piéton, le capot (7) va s'enfoncer de plusieurs millimètres (par exemple de l'ordre de 35 mm) vers le bas, en direction du compartiment moteur (2). Le capot (7) va appuyer de manière très brusque et très fortement contre le joint d'étanchéité (17). Ce déplacement du capot (7) va entraîner une rupture d'une ou des deux boîtes à eau latérales (14). La traverse centrale participe également au choc piéton en « flexion ».

La grille d'auvent (13) comprend un élément en un matériau insonorisant (32), maintenu au niveau de la face inférieure (22).

La présente invention n'est pas limitée aux modes de réalisation décrits et illustrés. De nombreuses modifications peuvent être réalisées, sans pour autant sortir du cadre défini par la portée du jeu de revendications.

L'agencement selon l'invention peut être prévu pour de berlines traditionnelles.

## Revendications

1. Agencement de cloison pour un compartiment moteur (2), appartenant à un véhicule automobile (1), destiné à assurer une étanchéité entre un bord intérieur avant d'un pare-brise (4) et un côté arrière (11) d'un capot (7) fermant le compartiment moteur (2), présentant un joint d'étanchéité (17) à son extrémité avant (16) venant en butée contre une face inférieure (9) du côté arrière (11) du capot (7), de façon à réaliser l'étanchéité, cet agencement comprenant une pièce centrale (13), portant le joint d'étanchéité (17), **caractérisé en ce qu'**il comprend deux pièces latérales (14) par l'intermédiaire desquelles la pièce centrale (13) est fixée à la caisse du véhicule, en étant bordée par ces deux pièces latérales (14), chacune des pièces latérales (14) étant apte à former une concavité (18) permettant l'écoulement d'eau en dehors du compartiment moteur (2).

2. Agencement selon la revendication 1, **caractérisé en ce que** les pièces latérales sont telles qu'un impact sur la surface supérieure du capot (17) lors d'un choc piéton entraîne la rupture de l'une au moins de ces pièces latérales (14).

3. Agencement selon la revendication 1 ou 2, **caractérisé en ce que** l'entretoise (27) est solidarisée à la coupelle d'amortisseur (26), sensiblement à l'horizontale, et sensiblement au même niveau que la surface supérieure (28) de ladite coupelle d'amortisseur (26).

4. Agencement selon la revendication 3, **caractérisé en ce que** la pièce latérale (14) est fixée par une zone de base (23) sur l'entretoise (27) par l'intermédiaire d'un axe de fixation sensiblement vertical (Z₁).

5. Agencement selon la revendication 2, **caractérisé en ce que** l'entretoise (29) est solidarisée à la coupelle d'amortisseur (26), sensiblement à la verticale d'au moins un rebord (31) de ladite coupelle d'amortisseur (26).

6. Agencement selon la revendication 5, **caractérisé en ce que** la pièce latérale est fixée par au moins un de ses bords à l'entretoise par l'intermédiaire d'un axe de fixation sensiblement longitudinal (X₁).

7. Agencement selon l'une quelconque des revendications précédentes, **caractérisé en ce qu'**il comprend une traverse centrale, supportant la pièce centrale (13) et fixée sur les deux pièces latérales (14).

8. Agencement selon l'une quelconque des revendications précédentes, **caractérisé en ce que** la pièce centrale (13) comprend un élément en un matériau insonorisant (32), disposé au niveau d'une face inférieure (22).

9. Véhicule, de type monospace (1), **caractérisé en ce qu'**il possède un agencement de cloison (12) selon l'une quelconque des revendications précédentes.

## Claims

1. Barrier arrangement for an engine compartment (2) belonging to a motor vehicle (1), intended to afford sealing between a forward inner edge of a windscreen (4) and a rear end (11) of a bonnet (7) closing the engine compartment (2), having a seal (17) at its forward end (16) butting against a lower face (9) of the rear end (11) of the bonnet (7) so as to afford sealing, this arrangement comprising a central part (13) bearing the seal (17), **characterized in that** it comprises two lateral parts (14) via which the central part (13) is attached to the body of the vehicle, being flanked by these two lateral parts (14), each of the lateral parts (14) being able to form a concave portion (18) allowing water to drain away from the engine compartment (2).

2. Arrangement according to Claim 1, **characterized in that** the lateral parts are such that impact on the upper surface of the bonnet (7) in a pedestrian impact causes at least one of these lateral parts (14) to break.

3. Arrangement according to Claim 1 or 2, **characterized in that** the spacer piece (27) is secured to the shock absorber cup (26), substantially along the horizontal, and substantially at the same level as the upper surface (28) of the said shock absorber cup (26).

4. Arrangement according to Claim 3, **characterized in that** the lateral part (14) is attached by a base region (23) to the spacer piece (27) via a substantially vertical axis (Z₁) of attachment.

5. Arrangement according to Claim 2, **characterized in that** the spacer piece (29) is secured to the shock absorber cup (26), substantially along plumb with at least one rim (31) of the said shock absorber cup (26).

6. Arrangement according to Claim 5, **characterized in that** the lateral part is attached by at least one of its edges to the spacer piece via a substantially longitudinal axis (X₁) of attachment.

7. Arrangement according to any one of the preceding claims, **characterized in that** it comprises a central cross-member, supporting the central part (13) and attached to the two lateral parts (14).

8. Arrangement according to any one of the preceding claims, **characterized in that** the central part (13) comprises an element made of a sound-proofing material (32), positioned at the level of an underside (22).

9. Vehicle, of the monospace type (1), **characterized in that** it has a barrier arrangement (12) according to any one of the preceding claims.

## Patentansprüche

1. Trennwandanordnung für einen Motorraum (2), der zu einem Kraftfahrzeug (1) gehört, die eine Dichtigkeit zwischen einem inneren Vorderrand einer Windschutzscheibe (4) und einer Rückseite (11) einer den Motorraum (2) verschließenden Haube (7) gewährleisten soll und an ihrem Vorderende (16) eine Dichtung (17) aufweist, die an einer Innenfläche (9) der Rückseite (11) der Haube (7) zur Anlage kommt, um Dichtigkeit herzustellen, wobei diese Anordnung ein Mittelteil (13) umfasst, das die Dichtung (17) trägt, **dadurch gekennzeichnet, dass** sie zwei Seitenteile (14) umfasst, mittels denen das Mittelteil (13) an der Karosserie des Fahrzeugs befestigt ist, indem es von diesen beiden Seitenteilen (14) eingefasst wird, wobei die Seitenteile (14) eine Konkavität (18) bilden können, die das Ablaufen von Wasser aus dem Motorraum (2) gestattet.

2. Anordnung nach Anspruch 1, **dadurch gekennzeichnet, dass** die Seitenteile derart sind, dass ein Aufprall auf die Oberseite der Haube (7) beim Aufschlagen eines Fußgängers zu dem Bruch mindestens eines dieser Seitenteile (14) führt.

3. Anordnung nach Anspruch 1 oder 2, **dadurch gekennzeichnet, dass** der Steg (27) im Wesentlichen in der Horizontalen und im Wesentlichen auf Höhe der Oberseite (28) des Aufhängungsdorns (26) fest mit dem Aufhängungsdorn (26) verbunden ist.

4. Anordnung nach Anspruch 3, **dadurch gekennzeichnet, dass** das Seitenteil (14) durch einen Basisbereich (23) mittels einer im Wesentlichen vertikalen Befestigungsachse (Z₁) an dem Steg (27) befestigt ist.

5. Anordnung nach Anspruch 2, **dadurch gekennzeichnet, dass** der Steg (29) im Wesentlichen in der Vertikalen mindestens einer Anschlusskante (31) des Aufhängungsdorns (26) fest an dem Aufhängungsdorn (26) angebracht ist.

6. Anordnung nach Anspruch 5, **dadurch gekennzeichnet, dass** das Seitenteil durch mindestens einen seiner Ränder mittels einer im Wesentlichen in Längsrichtung verlaufenden Befestigungsachse (X₁) an dem Steg befestigt ist.

7. Anordnung nach einem der vorhergehenden Ansprüche, **dadurch gekennzeichnet, dass** sie einen mittleren Querträger umfasst, der das Mittelteil (13) stützt und an den beiden Seitenteilen (14) befestigt ist.

8. Anordnung nach einem der vorhergehenden Ansprüche, **dadurch gekennzeichnet, dass** das Mittelteil (13) ein Element aus einem schallisolierenden Material (32) umfasst, das auf Höhe einer Unterseite (22) angeordnet ist.

9. Einvolumenfahrzeug (1), **dadurch gekennzeichnet, dass** es eine Trennwandanordnung (12) nach einem der vorhergehenden Ansprüche umfasst.
